# EUROPÄISCHE PATENTSCHRIFT

(11) **EP 2 177 838 B1**
(45) Veröffentlichungstag und Bekanntmachung des Hinweises auf die Patenterteilung: **18.01.2017**
(21) Anmeldenummer: 09012677.2
(22) Anmeldetag: 07.10.2009
(51) Int. Cl.: F24D 12/02, F24H 8/00

(54) **Brennwertkessel mit Ölbrenner**
Condensing boiler with oil burner
Chaudière à condensation dotée d'un brûleur à mazout

(30) Priorität: 14.10.2008 DE 202008013602 U
(43) Veröffentlichungstag der Anmeldung: 21.04.2010
(73) Patentinhaber: August Brötje GmbH, 26180 Rastede (DE)
(72) Erfinder: Wilken, Hajo, 26215 Wiefelstede (DE)
(74) Vertreter: Jabbusch, Matthias

(56) Entgegenhaltungen:
- EP-A1- 0 228 569
- WO-A1-2005/078358
- DE-A1- 4 338 324
- US-A- 4 379 447

## Beschreibung

Die Erfindung bezieht sich auf einen Brennwertkessel mit einem Brennraum und einem Abgasweg, mit einem in dem Brennraum feuernden Ölbrenner, mit integriertem Primär-Wärmetauscher und mit einem im Abgasweg vom Brennraum zum Abgaskamin angeordneten Sekundär-Wärmetauscher, wobei der Sekundär-Wärmetauscher an den Brennraum direkt angeflanscht ist, derart, dass in baulicher Hinsicht eine Kompakt-Einheit ausgebildet ist.

Die "Brennwert-Betriebsweise" mit Nutzung des Wärmeinhalts der aus dem Brennraum in den Abgaskamin eingeleiteten Brenngase, die zu einer Abkühlung der Brenngase führt, die bis zur Unterschreitung der so genannten Taupunkttemperatur erfolgt, um auch noch die Kondensationswärme bei der Abscheidung von Kondenswasser aus den Brenngasen zu nutzen, kann bei Brennwertkesseln mit einem Ölbrenner Probleme aufwerfen.

Dieser so genannte "Brennwert-Betrieb" mit Unterschreitung der Taupunkttemperatur ist, besonders bei einer Verheizung von schwefelhaltigen Heizölen, nachteilig; denn zusammen mit dem Kondenswasser bilden die schwefelhaltigen Abgase Säuren. Aggressive Säuren im Abgas wirken sich rasch nachteilig auf korrosionsgefährdete Kesselbauteile aus, die mit den Abgasen in Kontakt kommen.

Anfällig für aggressive Kondensate sind die Oberflächen der Wärmetauscher des Heizkessels, insbesondere der Sekundär-Wärmetauscher, in welchen der Temperaturbereich der abkühlenden Abgase den Bereich der Kondensation, den so genannten Taupunkt, durchläuft.

In diesem Bereich innerhalb des Sekundar-Wärmetauschers, in dem die Abgastemperatur bis unter den Taupunkt soweit gesenkt wird, dass sich Kondensat bildet, fallen aggressive Kondensate vorwiegend an.

Ein Brennwertkessel mit einem im Abgasweg angeordneten Sekundär-Wärmetauscher ist in der WO 2005/078358 A1 gezeigt. Dort ist der Sekundär-Wärmetauscher in den Brennwertkessel integriert. Es wird dort auf eine vertikale Ausrichtung in Zuordnung zum Brennraum geachtet. Ein weiterer Wärmetauscher ist aus der DE 43 38 324 bekannt. Dort ist ein Wärmetauscher in einem Abstand zu einem Heizkessel angeordnet.

Der Erfindung liegt die Aufgabe zugrunde, eine Sekundär-Wärmetauscherfläche bereitzustellen, die korrosionsunempfindlich ist und deshalb bei einem Brennwertbetrieb die Verheizung aller Öle, nicht nur schwefelarmer Öle, erlaubt; gleichzeitig soll der Schnittpunkt der Temperaturkurven, in dem der Bereich des Taupunktes durchlaufen wird, innerhalb des Sekundär-Wärmetauschers so dicht wie möglich an den Primär-Wärmetauscher gebracht werden, um kurze Abgaswege zu gewährleisten, sodass eine besonders kompakte Bauweise des mit Öl betriebenen Kessels erreicht werden kann.

Diese Aufgabe ist durch die Merkmale des Patentanspruchs 1 gelöst. Weiterbildungen und vorteilhafte Ausgestaltungen ergeben sich aus den Merkmalen der Ansprüche 2 bis 5.

Dadurch, dass der Sekundär-Wärmetauscher an den Brennraum direkt derart angeflanscht ist, dass in baulicher Hinsicht ein als Kompakt-Einheit ausgebildeter Brennwertkessel für die Verfeuerung von Öl vorliegt, sind Abgasaustritt des Primärwärmetauschers und Abgaseintritt des Sekundär-Wärmetauschers nahezu in einer Ebene zusammengelegt. Der Abgasweg vom Brennraum zum Abgaskamin ist mit Vorteil auf eine Mindestlänge verkürzt, was der angestrebten Kompaktheit des erfindungsgemäßen Brennwertkessels äußerst förderlich ist.

Einen besonderen Vorteil stellt des weiteren dar, dass sich allein durch eine Variation lediglich der Sekundärheizfläche, Brennwertkessel mit verschiedenen Gesamtleistungen ergeben.

Der Werkstoff für den direkt angeflanschten Sekundär-Wärmetauscher ist kohlenstofffaserverstärkter Kunststoff ("CFK"), auch als Karbon bekannt. Damit ist eine Nachschaltheizfläche bereitgestellt, die äußerst korrosionsunempfindlich ist und es mit Vorteil erlaubt, alle Öle, nicht nur schwefelarme, zu verheizen. Der Betrieb des erfindungsgemäßen Kessels als Brennwertkessel ist nicht auf schwefelarme Öle beschränkt.

Aufgrund seiner Wärmeleitzahl eignet sich der Werkstoff "CFK" besonders gut für einen Wärmetauscher. Dabei hat die glatte Oberfläche des aus "CFK" gefertigten Wärmetauschers den Vorteil, dass sie eine optimale Reinigung ermöglicht. "CFK" ist auch problemlos spanabhebend zu bearbeiten, sodass z.B. hohe Rippen gefräst werden können, die der Vergrößerung der Wärmeübertragungsflächen dienen und somit die angestrebte Kompaktheit der Baueinheit fördern.

Der Sekundär-Wärmetauscher besteht erfindungsgemäß aus einem rechteckförmigen "CFK"-Block, der durch spanabhebende Bearbeitung gebildete Brenngaskanäle in Taschenform und quer dazu verlaufende Wasserkanäle in Form von Bohrungen aufweist. Der rechteckförmige "CFK"-Block entspricht einem als Kreuzstrom-Wärmetauscher ausgebildeten Quader.

Der Sekundär-Wärmetauscher ist vorzugsweise unter den Brennraum geflanscht und schmaler als der Durchmesser des als liegender Zylinder ausgebildeten Brennraumes.

Somit verbleibt unter dem Brennraum neben dem untergeflanschten Sekundär-Wärmetauscher ein freier Raum, der für Einbauten von Aggregaten, z.B. einer Heizungsumwälzpumpe oder dergleichen, genutzt werden kann. Der "CFK"-Block bzw. der Quader, ist an mindestens einer seiner lotrechten Seitenflächen mit wenigstens einer vorgesetzten Wassertasche ausgerüstet. Die vorgesetzten Seitentaschen können extern gefertigte Bauteile sein.

Die Wassertaschen können Bestandteile einer tragenden Aufnahme für den "CFK"-Block sein, welche ebenfalls der Befestigung dient, die mit entsprechenden Befestigungselementen, z.B. Schrauben, die Anflanschung des Sekundär-Wärmetauschers unter den Abgasaustritt des Brennraumes ermöglicht.

Die an den "CFK-Block" angesetzten Wassertaschen können aus Leichtmetall, vorzugsweise aus Aluminium gefertigt sein.

Insgesamt weist der für die Verfeuerung nicht nur schwefelarmer Öle geeignete Brennwertkessel aufgrund seiner kompakten Bauweise ein vorteilhaft geringes Gewicht auf, womit seine Wandkesseltauglichkeit ohne weiteres gegeben ist.

Ein Ausführungsbeispiel der Erfindung, aus dem sich weitere erfinderische Merkmale ergeben, ist in der Zeichnung dargestellt. Es zeigen:
- Fig. 1:: eine Schnittansicht einer aus Brennraum mit Primärwärmetauscher sowie untergeflanschtem Sekundär-Wärmetauscher bestehenden Baugruppe eines Brennwertkessels, und
- Fig. 2:: eine Seitenansicht der Baugruppe des Brennwertkessels gemäß Fig. 1.

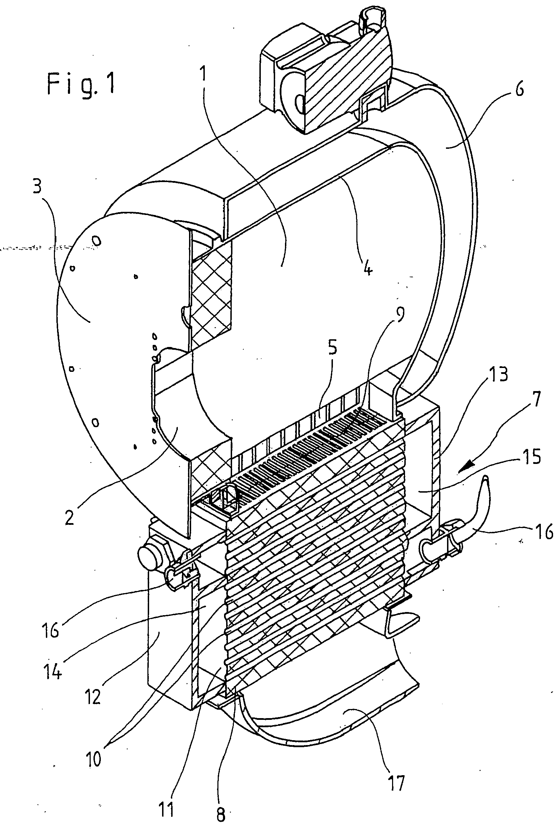

Fig. 1 zeigt eine Schnittansicht eines Brennwertkessels mit seinem als liegender Zylinder ausgebildeten Brennraum 1. Durch die Öffnung 2 in der vorderen Brennraumwand 3 feuert ein nicht weiter dargestellter Ölbrenner in den Brennraum 1. Der Brennraum 1 wird begrenzt durch seine Brennraumwand 4 die zusammen mit hier unten sichtbaren, aufgesetzten Rippen 5 einen Primär-Wärmetauscher ausbildet, über den die Wärme aus dem Brennraum 1 an die Wasserseite 6 des Kessels übertragen wird.

An der Unterseite des Brennraumes verlassen die Brenngase nachdem sie dem Brennraum 1 umströmt haben, die Brenngaswege im Bereich der aufgesetzten Rippen 5 und gelangen in den Eintrittsbereich eines unter den Brennraum 1 direkt geflanschten Sekundär-Wärmetauschers 7. Dieser besteht aus einem "CFK"-Block 8 mit durch spanabhebende Bearbeitung gebildeten Brenngaskanälen 9 sowie quer dazu verlaufenden Wasserkanälen 10.

Der "CFK-Block" 8 ist hier an seinen beiden lotrechten Seitenflächen 11 mit vorgesetzten Wassertaschen 12 und 13 ausgerüstet.

Jede Wassertasche 12 bzw. 13 weist eine Wassersammelkammer 14 bzw. 15 auf, die jeweils einen Anschluss 16 für Heizungsvorlauf oder Heizungsrücklauf hat.

Die aus dem Brennraum 1 abströmenden Abgase treten aus dem Sekundär-Wärmetauscher 7 an der Unterseite aus und werden über den Rohrstutzen 17 in den Abgaskamin geleitet, der hier nicht weiter dargestellt ist. Der Sekundär-Wärmetauscher 7, z.B. sein Rohrstutzen 17, ist selbstverständlich auch mit einem entsprechenden Kondensatableiter ausgerüstet, der das im Sekundär-Wärmetauscher anfallende Kondenswasser sammelt und ableitet.

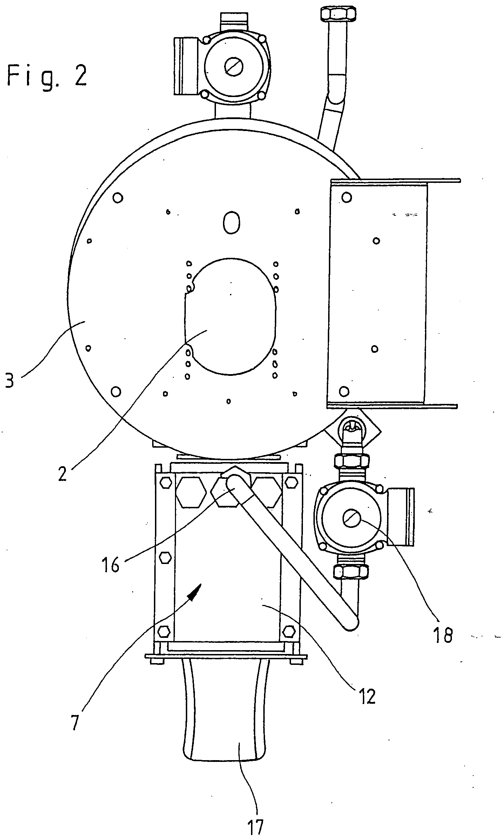

Fig. 2 zeigt eine Seitenansicht des Brennwertkessels. Gleiche Bauteile sind mit gleichen Bezugszahlen wie in Fig. 1 bezeichnet. Fig. 2 verdeutlicht den Vorteil des direkt unter den Brennraum 1 geflanschten Sekundär-Wärmetauschers 7, dessen Breite geringer ist als der Durchmesser des als liegender Zylinder ausgebildeten Brennraumes 1, hier angedeutet durch seine kreisförmige Stirnwand 3 mit der Öffnung 2, durch die das Brennerrohr eines nicht weiter dargestellten Ölbrenners eingeführt wird um den Brennraum 1 zu beheizen.

Durch die kompakte Bauweise ist ein Einbauraum für eine Umwälzpumpe 18 gewonnen.

## Patentansprüche

1. Brennwertkessel mit einem Brennraum und einem Abgasweg, mit einem in dem Brennraum feuernden Ölbrenner mit integriertem Primär-Wärmetauscher und mit einem im Abgasweg vom Brennraum zum Abgaskamin angeordneten Sekundär-Wärmetauscher, wobei der Sekundär-Wärmetauscher an den Brennraum direkt verbunden ist, derart, dass in baulicher Hinsicht eine Kompakt-Einheit ausgebildet ist,
**dadurch gekennzeichnet,**
**dass** der Sekundär-Wärmetauscher (7) an den
Brennraum direkt angeflanscht ist, und dass der Sekundär-Wärmetauscher (7) einen rechteckförmigen Block (8) aus kohlenstofffaserverstärktem Kunststoff aufweist, der durch spanabhebende Bearbeitung gebildete Brenngaskanäle (9) und quer dazu verlaufende Wasserkanäle (10) aufweist.

2. Brennwertkessel nach Anspruch 1, **dadurch gekennzeichnet, dass** der Sekundär-Wärmetauscher (7) unter den Brennraum (1) geflanscht ist, und schmaler ist als der Durchmesser des als liegender Zylinder ausgebildeten Brennraums (1).

3. Brennwertkessel nach Anspruch 1 oder 2, **dadurch gekennzeichnet, dass** der Block (8) aus kohlenstofffaserverstärktem Kunststoff an wenigstens einer seiner lotrechten Seitenfläche (11) mit vorgesetzten Wassertaschen (12, 13) ausgerüstet ist.

4. Brennwertkessel nach einem der vorhergehenden Ansprüche, **dadurch gekennzeichnet, dass** der Block (8) aus kohlenstofffaserverstärktem Kunststoff an seiner dem Brennraum zugekehrten oberen waagerechten Fläche Befestigungselemente zur Anflanschung unter den Abgasaustritt des Brennraumes aufweist.

5. Brennwertkessel nach den Ansprüchen 1 bis 4 mit zumindest Anspruch 3, **dadurch gekennzeichnet, dass** jede der vorgesetzten Wassertaschen (12, 13) mindestens eine Wassersammelkammer (14, 15) aufweist, die jeweils wenigstens einen Anschluss (16) für Heizungsvorlauf oder Heizungsrücklauf hat.

## Claims

1. A condensing boiler with a combustion chamber and an exhaust gas path, with an oil boiler which fires the combustion chamber and which has an integrated primary heat exchanger and a secondary heat exchanger arranged in the exhaust gas path from the combustion chamber to the exhaust gas chimney, wherein the secondary heat exchanger is connected directly to the combustion chamber in such a manner that from a structural point of view, a compact unit is formed,
**characterized in**
**that** the secondary heat exchanger (7) is flanged directly onto the combustion chamber, and that the secondary heat exchanger (7) has a rectangular block (8) which is made from carbon-fiber-reinforced plastic and which has combustion gas channels (9) formed by a material removing process and water channels (10) running transverse thereto.

2. The condensing boiler according to claim 1, **characterized in that** the secondary heat exchanger (7) is flanged beneath the combustion chamber (1) and is narrower than the diameter of the combustion chamber (1) which is formed as a horizontal cylinder.

3. The condensing boiler according to claim 1 or 2, **characterized in that** the block (8) made from carbon-reinforced-plastic is equipped, at least on one of its vertical side faces (11), with front-mounted water pockets (12, 13).

4. The condensing boiler according to any one of the preceding claims, **characterized in that** the block (8) made from carbon-reinforced-plastic has fastening elements on its upper horizontal surface facing the combustion chamber for flange-mounting beneath the exhaust gas outlet of the combustion chamber.

5. The condensing boiler according to claims 1 to 4, comprising at least claim 3, **characterized in that** each of the front-mounted water pockets (12, 13) has at least one water collecting chamber (14, 15) each having at least one connection (16) for heating flow or heating return.

## Revendications

1. Chaudière à condensation comportant une chambre de combustion et une voie d'échappement, un brûleur à mazout brûlant dans la chambre de combustion et comportant un échangeur de chaleur primaire intégré et un échangeur de chaleur secondaire disposé dans la voie d'échappement allant de la chambre de combustion à la cheminée d'échappement, l'échangeur de chaleur secondaire étant directement raccordé à la chambre de combustion de manière à former une unité compacte au niveau construction,
**caractérisée en ce**
**que** l'échangeur de chaleur secondaire (7) est bridé directement à la chambre de combustion et que l'échangeur de chaleur secondaire (7) présente un bloc quadrangulaire (8) composé de matière plastique renforcée aux fibres de carbone et qui, suite à un usinage par enlèvement de copeaux, présente des canaux constitués pour le gaz de combustion (9) et des canaux à eau (10) orientés transversalement par rapport à ceux-ci.

2. Chaudière à condensation selon la revendication 1, **caractérisée en ce que** l'échangeur de chaleur secondaire (7) est bridé sous la chambre de combustion (1) et est plus étroit que le diamètre de la chambre de combustion réalisée sous forme d'un cylindre couché (1).

3. Chaudière à condensation selon la revendication 1 ou 2, **caractérisée en ce que** le bloc (8) en matière plastique renforcée aux fibres de carbone est équipé au niveau d'au moins une de ses surfaces latérales verticales (11) de poches à eau proéminentes (12, 13).

4. Chaudière à condensation selon une des revendications précédentes, **caractérisée en ce que** le bloc (8) en matière plastique renforcée aux fibres de carbone présente, sur sa surface horizontale supérieure tournée vers la chambre de combustion, des éléments de fixation pour un bridage sous la sortie d'échappement de la chambre de combustion.

5. Chaudière à condensation selon les revendications 1 à 4 avec au moins la revendication 3, **caractérisée en ce que** chacune des poches à eau proéminentes (12, 13) présente au moins une chambre de collecte d'eau (14, 15) qui comporte respectivement au moins un raccordement (16) pour l'aller du chauffage ou le retour de chauffage.
